# EUROPEAN PATENT SPECIFICATION

(11) **EP 2 503 293 B1**
(45) Date of publication and mention of the grant of the patent: **20.05.2015**
(21) Application number: 11002358.7
(22) Date of filing: 22.03.2011
(51) Int. Cl.: G01C 21/36

(54) **Labelling of map elements in digital maps**
Markierung von Kartenelementen in digitalen Karten
Étiquetage d'éléments de cartes dans des cartes numériques

(43) Date of publication of application: 26.09.2012
(73) Proprietor: Harman Becker Automotive Systems GmbH, 76307 Karlsbad (DE)
(72) Inventor: Spindler, CC, 76135 Karlsruhe (DE); Ivanov, Vladimir, 81375 München (DE); Fischer, Martin, 80805 München (DE); Schütz, Simon, 70195 Stuttgart (DE); Pryakhin, Alexey, 81476 München (DE)
(74) Representative: Grünecker Patent- und Rechtsanwälte PartG mbB

(56) References cited:
- EP-A1- 1 710 713
- EP-A2- 0 940 795
- JP-A- 8 194 432
- JP-A- 2000 029 450
- US-A1- 2005 052 413
- US-A1- 2008 198 162
- US-B1- 6 565 610

## Description

### Field of Invention

The present invention relates to digital maps representing towns and landscapes that can be used for route guidance by a navigation system and, in particular, it relates to the labeling of map elements as roads and streets.

### Prior Art

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc.

In the digital maps particular map elements, as rivers, mountains, roads or particular areas, are displayed supplemented by names (labels) of the respective map elements. For example, a winding river is labeled by the name of the river or a mountain range is displayed together with the name of the mountain range.

However, both in two-dimensional and three-dimensional digital map representations conventional labeling by characters representing the names of map elements cannot be realized in satisfying manner with respect to an appropriate positioning. In particular, in conventional digital map representation it commonly happens that parts of the map elements, for example road junctions, cannot be reliably identified, since they are at least partly hidden by labels annotated to the map elements. There is just a need for a method for labeling map elements that guarantees that all parts of the labeled map element can reliably by identified by a user of a digital map comprising the map element.

Documents US 2008/0198162 A1, US 2005/0052413 A1, JP 8 194 432 A, US 6 565 610 B1, EP 1 710 713 A1 and JP 2000 029 450 A disclose methods for labeling map elements such that the map element is not covered by the label.

### Description of the Invention

The present invention addresses the above-mentioned need and provides a method for labeling a map element of a digital map according to claim 1.

A map element is a graphical element of the map representing some physical object, for example, a building, a road, a mountain, a river, a lake, etc. The label denotes a name of the map element, for example, the name of a river. Since according to the invention it is determined a portion in the vicinity of the map element in the digital map where no labeling shall occur, it can be reliably avoided that a label partly overlaps and thereby hides a portion of the map element. Thus, for example, a junction in two-dimensional or three-dimensional view can be displayed in a manner that allows that all relevant parts can be completely seen by a user.

The portion in the vicinity of the map element in the digital map where no labeling shall occur is determined based on coordinates provided for the digital map. Thereby, exact positioning of the label is made possible. Thus, according to the invention, the method for labeling a map element of a digital map comprises determining coordinate values of a point of the map element and wherein the portion in the vicinity of the map element in the digital map where no labeling shall occur is determined based on the determined coordinate values. The coordinate values are stored in an employed database.

According to the invention, the portion of the map element in the digital map where no labeling shall occur and/or the portion in the vicinity of the map element where no labeling shall occur is determined by a circle defined about the coordinates with the determined coordinate values. For example, it may be determined a radius about coordinate of a central point of the map element. Information on the coordinate values of such coordinates is also stored in the employed database. In particular, the method further comprises storing coordinate values of the portion in the vicinity of the map element in the digital map where no labeling shall occur and retrieving these coordinate values before labeling the map element with the label in order to reliably avoid hiding of portions of the map element. Thus, according to the invention there is no need for any calculation of the position of the label in the display process. The calculation has rather been done beforehand and the result has be stored in form of the coordinate values of the portion of the map element where no labeling shall occur and/or the portion in the vicinity of the map element in the digital map where no labeling shall occur.

The inventive method according to a particular embodiment also comprises
representing the map element by at least one spline comprising vertices;
storing coordinate values corresponding to (derived from) coordinate values of at least some of the vertices of the at least one spline; and
displaying the map element and displaying the assigned label in the digital map based on the stored coordinate values such that the label is adapted to the geometric form of the map element.

The map element is represented, i.e. drawn, by means of one or more splines. The term "spline" denotes a function that is defined piecewise by polynomials. The correspondence of the coordinate values is to be understood as follows. When m-1 vertices (knots) tᵢ, i = 0, .., m, are used for the representation of the map element, these vertices are associated with coordinates (xᵢ, yᵢ) in the digital map (or (xᵢ, yᵢ, zᵢ) in the case of a three-dimensional digital map). According to the invention coordinates for positioning the label are derived from the coordinates of vertices used for the spline(s). Accordingly, coordinates corresponding to (derived from) the ones of the vertices used for the spline representation of the map element can be used for the representation of the label (name) of the map element. For example, a number of the vertices can be chosen and coordinates shifted to some degree with respect to the coordinates of the vertices (xᵢ+dₓ, yᵢ+d_{y}), with constants dₓ and d_{y}, can be stored for the generation of the label, for example, the generation of one or more splines by which the label can be generated. Thereby, a label constituted by characters and/or symbols and/or icons (for example, road number icons) following substantially the geometric shape (curve) or the outer contour of the map element can be displayed in the digital map.

The combination of avoiding hiding of a mal element by a label and labeling with labels following the shape (contour) of a map element synergetically results in an unprecedented readability of the labels and identification of the corresponding map element by the label.

It is, furthermore, provided a method for route guidance implemented in a navigation system, in particular, a vehicle navigation system, with a display device comprising the steps of the method according to one of the above-described examples and providing guidance information to a user of the navigation system.

It is also provided a computer program product, comprising one or more computer readable media having computer-executable instructions for performing the steps of the method according to one of the above-described examples.

The above-mentioned need is, moreover, addressed by a navigation database comprising
digital map data comprising data of a map element;
data comprising coordinate values of a point of the map element;
data of a label for the map element; and
data referring to the coordinate values indicating a portion of a digital map corresponding to the digital map data around the coordinates with the coordinate values where no labeling shall occur.

Thus, the data of the label is linked to the coordinate values indicating a portion of a digital map corresponding to the digital map data around the coordinates with the coordinate values where no labeling shall occur such that the data of the label and the linked coordinate values can be retrieved (read) by a processing means in order to display the label at an appropriate position in the digital map.

Furthermore, a navigation system, in particular, a vehicle navigation system, is provided that comprises
the navigation database as mentioned above; and
a display means configured to display a digital map based on data of the navigation database such that the map element of the digital map is labeled by the label with characters without hiding the portion around the coordinates with the coordinate values where no labeling shall occur.

In all of the above examples, the digital map may be a three-dimensional map. In particular, the three-dimensional digital map may be generated based on a digital terrain model. A terrain model is a three-dimensional model, e.g., a digital model of a landscape obtained by laser-scanning, for instance. A great variety of topographic terrain models is provided by official institutions as well as commercial providers. In principle, a digital terrain model is a digital file consisting of terrain elevations for ground positions at regularly or irregularly spaced horizontal intervals. The term "terrain" as used herein shall also comprise the three-dimensional topography of an urban area, a city, a village etc. The raster points included in the terrain model have three-dimensional coordinate values.

Moreover, in all of the above-described examples the label may be a three-dimensional label comprising three-dimensional representations of characters and the map element may be given by a bitmap or a vector graphic object and/or the label may be given by a vector graphic object.

Additional features and advantages of the present invention will be described with reference to the drawings. In the description, reference is made to the accompanying figure that is meant to illustrate an embodiment of the invention. It is understood that such an embodiment does not represent the full scope of the invention.

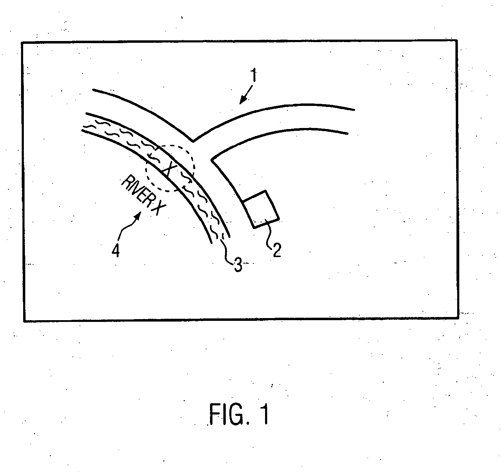

Figure 1 illustrates in a simplified manner a section of a digital map including a label in accordance with the present invention.

Figure 1 illustrates a part of a digital map showing some streets 1 and a parking lot 2 as well as a river 3. The map element representing the river 3 is generated by means of splines. The river 3 represents a map element that is labeled by the label "River X" 4 giving the name of the river. As it is shown in Figure 1 the label is positioned at an appropriate distance to the map element 3 such that no portion of the map element 3 is hidden by the label. In Figure 1 it is also indicated a point of the map element 3 by an X. The dashed lines forming a circle around the point X shows a portion of the map element 3 and in the vicinity of the same that indicates a region where it is not allowed to position the label 4. The coordinate values of the circle are stored in a database and retrieved in order to position the map element 3 after retrieving the same from a database.

## Claims

1. Method for labeling a map element of a digital map, comprising
determining a portion in the vicinity of the map element in the digital map where no labeling shall occur comprising determining coordinate values of a point of the map element and wherein the portion in the vicinity of the map element in the digital map where no labeling shall occur is determined based on the determined coordinate values;
wherein the portion in the vicinity of the map element where no labeling shall occur is determined by a circle defined about the coordinates with the determined coordinate values; and
labelling the map element with a label such that the portion in the vicinity of the map element in the digital map where no labeling shall occur is not covered by the,label and storing in a database coordinate values of the circle and retrieving the stored coordinate values of the circle from the database before labeling the map element with the label.

2. The method according to claim 1, wherein the digital map is a three-dimensional map and/or the label is a three-dimeniional label comprising three-dimensional representations of characters.

3. The method according to one of the preceding claims, wherein the map element is given by a bitmap or a vector graphic object and/or the label is given by a vector graphic object.

4. The method according to one of the preceding claims, further comprising
representing the map element by at least one spline comprising vertices;
storing coordinate values derived from coordinate values of at least some of the vertices of the at least one spline; and
displaying the map element and displaying the assigned label in the digital map based on the stored coordinate values such that the label is adapted to the geometric form of the map element.

5. A method for route guidance implemented in a navigation system, in particular, a vehicle navigation system, with a display device comprising the steps of the method according to one of the preceding claims and providing guidance information to a user of the navigation system.

6. Computer program product, comprising one or more computer readable media having computer-executable instructions for performing the steps of the method according to one of the preceding claims.

## Patentansprüche

1. Verfahren zum Kennzeichnen eines Kartenelements einer digitalen Karte, umfassend
Bestimmen eines Bereichs in der Nähe des Kartenelements auf der digitalen Karte, in dem keine Kennzeichnung erfolgen soll, umfassend Bestimmen von Koordinatenwerten eines Punktes des Kartenelements, und wobei der Bereich in der Nähe des Kartenelements auf der digitalen Karte, in dem keine Kennzeichnung erfolgen soll, auf Grundlage der bestimmten Koordinatenwerte bestimmt wird;
wobei der Bereich in der Nähe des Kartenelements, in dem keine Kennzeichnung erfolgen soll, durch einen Kreis bestimmt wird, der um die Koordinaten mit den bestimmten Koordinatenwerten herum definiert wird; und
Kennzeichnen des Kartenelements mit einer Kennzeichnung derart, dass der Bereich in der Nähe des Kartenelements auf der digitalen Karte, in dem keine Kennzeichnung erfolgen soll, nicht von der Kennzeichnung abgedeckt wird, und Speichern von Koordinatenwerten des Kreises in einer Datenbank und Abrufen der gespeicherten Koordinatenwerte des Kreises aus der Datenbank vor dem Kennzeichnen des Kartenelements mit der Kennzeichnung.

2. Verfahren nach Anspruch 1, wobei die digitale Karte eine dreidimensionale Karte ist und/oder die Kennzeichnung eine dreidimensionale Kennzeichnung ist, die dreidimensionale Darstellungen von Zeichen umfasst.

3. Verfahren nach einem der vorangehenden Ansprüche, wobei das Kartenelement durch ein Bitmap- oder Vektorgrafikobjekt bereitgestellt wird und/oder die Kennzeichnung durch ein Vektorgrafikobjekt bereitgestellt wird.

4. Verfahren nach einem der vorangehenden Ansprüche, ferner umfassend
Darstellen des Kartenelements durch wenigstens einen Keil, der Eckpunkte umfasst;
Speichern von Koordinatenwerten, die aus Koordinatenwerten von wenigstens einigen der Eckpunkte des wenigstens einen Keils hergeleitet werden; und
Anzeigen des Kartenelements und Anzeigen der zugewiesenen Kennzeichnung auf der digitalen Karte auf Grundlage der gespeicherten Koordinatenwerte, derart, dass die Kennzeichnung an die geometrische Form des Kartenelements angepasst wird.

5. Verfahren zur Routenführung, das in einem Navigationssystem implementiert wird, insbesondere einem Fahrzeugnavigationssystem, mit einerAnzeigevorrichtung, das die Schritte des Verfahrens nach einem der vorangehenden Ansprüche umfasst und Führungsinformationen an einen Benutzer des Navigationssystems bereitstellt.

6. Computerprogrammprodukt, umfassend ein oder mehrere computerlesbare Medien mit von Computern ausführbaren Anweisungen zum Durchführen der Schritte des Verfahrens nach einem der vorangehenden Ansprüche.

## Revendications

1. Procédé d'étiquetage d'un élément de carte d'une carte numérique, comprenant la détermination d'une partie dans le voisinage de l'élément de carte dans la carte numérique où aucun étiquetage n'aura lieu, comprenant la détermination de valeurs de coordonnées d'un point de l'élément de carte et où la partie dans le voisinage de l'élément de carte dans la carte numérique où aucun étiquetage n'aura lieu est déterminé en fonction des valeurs déterminées de coordonnées ;
la partie au voisinage de l'élément de carte où aucun étiquetage n'aura lieu est déterminée par un cercle défini autour des coordonnées avec les valeurs déterminées de coordonnées ; et
l'étiquetage de l'élément de carte avec une étiquette telle que la partie située au voisinage de l'élément de carte dans la carte numérique où aucun étiquetage n'aura lieu n'est pas couverte par l'étiquette et l'enregistrement dans une base de données de valeurs de coordonnées du cercle et la récupération des valeurs de coordonnées enregistrées du cercle à partir de la base de données avant l'étiquetage de l'élément de carte avec l'étiquette.

2. Procédé selon la revendication 1, dans lequel la carte numérique est une carte tridimensionnelle et/ou l'étiquette est une étiquette tridimensionnelle comprenant des représentations tridimensionnelles de caractères.

3. Procédé selon l'une des revendications précédentes, dans lequel l'élément de carte est donné par un matriciel ou par un objet graphique vectoriel et/ou l'étiquette est donnée par un objet graphique vectoriel.

4. Procédé selon l'une des revendications précédentes, comprenant en outre la représentation de l'élément de carte par au moins une cannelure comprenant des sommets ;
l'enregistrement de valeurs de coordonnées dérivées des valeurs de coordonnées d'au moins une partie des sommets de l'au moins une cannelure ; et
l'affichage de l'élément de carte et l'affichage de l'étiquette attribuée dans la carte numérique en fonction des valeurs enregistrées de coordonnées, de sorte que l'étiquette est adaptée à la forme géométrique de l'élément de carte.

5. Procédé de recommandation d'itinéraire mis en oeuvre dans un système de navigation, en particulier, un système de navigation de véhicule, avec un dispositif d'affichage comprenant les étapes du procédé selon l'une des revendications précédentes et procurant des informations de recommandation à un utilisateur du système de navigation.

6. Produit de type programme informatique, comprenant au moins un support lisible par ordinateur contenant des instructions exécutables par un ordinateur servant à effectuer les étapes du procédé selon l'une des revendications précédentes.
